# EUROPEAN PATENT APPLICATION

(11) **EP 2 530 445 A1**
(43) Date of publication of application: **05.12.2012**
(21) Application number: 10843889.6
(22) Date of filing: 25.01.2010
(51) Int. Cl.: G01L 19/04, G01L 9/00, G01L 19/00

(54) **PRESSURE SENSING DEVICE**

(71) Applicant: Kabushiki Kaisha Saginomiya Seisakusho, Tokyo 165-0033 (JP)
(72) Inventor: SHIBATA Hiroshi, Sayama-shi Saitama 350-1327 (JP); HONDOH Masahide, Sayama-shi Saitama 350-1327 (JP); KANAZAKI Fumio, Sayama-shi Saitama 350-1327 (JP); IZUMIYA Kazuhiro, Sayama-shi Saitama 350-1327 (JP)
(74) Representative: Grünecker, Kinkeldey, Stockmair & Schwanhäusser
(86) International application number: PCT/JP2010/050884
(87) International publication number: WO 2011/089724

(57) **Abstract**

Problem

In a pressure sensing device for detecting fluid pressure of the fluid introduced into the cap member 21 via the joint 1 by the pressure detecting portion 2, the joint 1 and the pressure detecting portion 2 are surely joined together, and the production process is simplified, thereby intermediate stock is reduced.

Solution

A washer-shaped clad member 3 is interposed between a base portion 11 of a joint 1 made of brass and a cap member 21 made of stainless steel. The clad member 3 has a first layer 31 made of stainless steel disposed at the cap member 21 side, and a second layer 32 made of oxygen-free copper disposed at the base portion 11 side. A whole circumference of a boundary portion between the first layer 31 and the cap member 21 is laser-welded, and a welding mark 7 is formed. A whole circumference of a boundary portion between the second layer 32 and the base portion 11 is laser-welded, and a welding mark 8 is formed. The laser beam is released toward the base portion 11 while the laser output is attenuated, and a release mark 8a is formed.

## Description

### [Technical Field]

The present invention relates to a pressure sensing device to obtain data corresponding to a pressure of a fluid introduced via a joint, such as a pressure switch for outputting on/off signals corresponding to a pressure change of a fluid, for example, a refrigerant of a refrigeration cycle device, or a pressure sensor for outputting a pressure signal when detecting a pressure of a fluid.

### [Background Art]

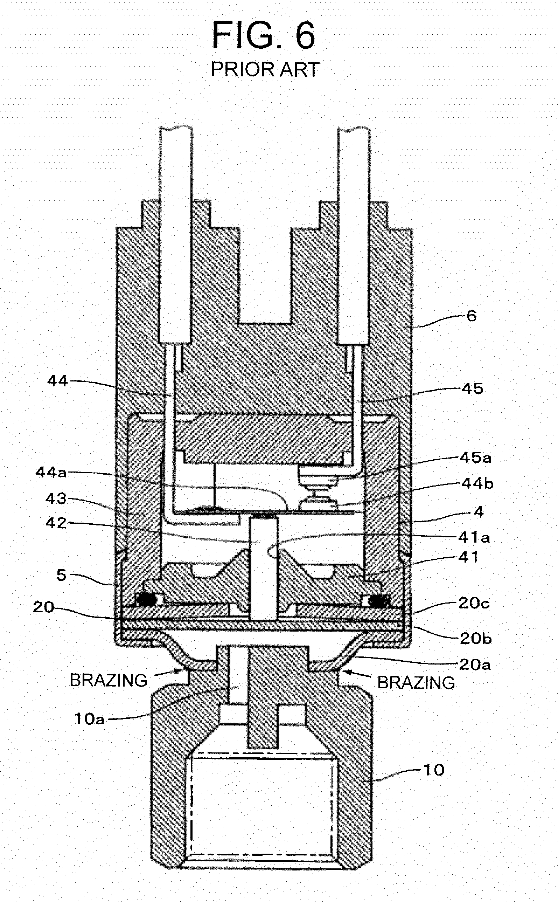

Conventionally, as a pressure sensing device, for example, there is a pressure switch shown in Fig. 6. This pressure switch includes: a joint 10 connected to a pipe through which a detecting target fluid flows; a pressure detecting portion 20; a switching portion 4; a swaging plate 5; and a case 6 made of polyamide resin. The detecting portion 20 is composed of a cap member 20a connected to the joint 10, a circular plate 20b composing a pressure vessel together with the cap member 20a, and a washer-shaped stopper 20c for preventing the circular plate 20b from being deformed more than a specific amount.

The switching portion 4 includes: a guide 41 which is provided with a shaft hole 41a at the center thereof; a shaft 42 inserted into the shaft hole 41a of the guide 41; and a cylindrical terminal block 43 fitted with a periphery of the guide 41. The cap member 20a, the circular plate 20b, and the stopper 20c are swaged to an end of the terminal block 43 by the swaging plate 5. A C terminal 44 and an L terminal 45 are fixed to the terminal block 43, and a contact plate 44a is attached to the C terminal 44. Further, a C contact 44b is attached to the contact plate 44a, and an L contact 45a is attached to the L terminal 45. Further, the terminal block 43 is received in the case 6.

According to the structure described above, the fluid is introduced into the pressure vessel composed of the cap member 20a and the circular plate 20b via an introducing path of the joint 10, and the circular plate 20b is deformed corresponding to the pressure of the fluid so as to push the shaft 42. Then, when the pressure reaches a predetermined set pressure value, the C terminal 44b works directly with the shaft 42 to abut on the L terminal 45a, thereby a switch is turned on. Thus, it is detected that the pressure of the fluid reaches the set pressure value.

Here, the joint 10 is made of brass, and the cap member 20a is made of stainless steel. The joint 10 and the cap member 20a are connected to each other by brazing. Further, similar to this conventional pressure switch, the pressure switch in which the joint and the cap member are connected to each other by brazing is disclosed in, for example, JP, A, 2002-55012.

### [Citation List]

### [Patent Literature]

[PTL 1]
   JP, A, 2002-55012

### [Summary of Invention]

### [Technical Problem]

In a production process of the conventional pressure switch, the brazing between the joint 10 and the cap member 20a is performed by a burner brazing and a furnace brazing. Therefore, for removing flux and burnt deposit, it is necessary to pickle. Pickling is undesirable in view of environmental protection and pollution prevention.

Further, when the conventional pressure switch is produced, firstly, a component-in-progress is made by brazing between the joint 10 and the cap member 20a. Then, the circular plate 20b and the stopper 20c are assembled with the component-in-progress and plasma welding is performed to produce the detecting portion 20. Then, the detecting portion 20 is assembled with the switching portion 4.

Therefore, there is an intermediate stock as the component-in-progress made by joining the joint 10 to the cap member 20a, and there is a problem about cost. Further, because the joint 10 is previously joined to the cap member 20a, there is a problem that flexibility in using a joint of different specification or different type is low.

An object of the present invention is to provide a pressure sensing device configured to detect pressure of fluid by introducing the fluid from a joint to a pressure detecting portion composed of a cap member in which the joint and the cap member are surely joined together, and corrosion resistance property of the joining portion is increased. Further, an additional object is to reduce intermediate stock such as component-in-progress by joining the joint afterward and simplifying a production process.

### [Solution to Problem]

According to the invention claimed in claim 1, there is provided a pressure sensing device comprising:
a brass-made joint connected to a pipe through which fluid of an object for pressure detection flows;
a pressure detecting portion having a stainless-steel-made cap member into which the fluid is introduced from the joint; and
a washer-shaped clad member interposed between the cap member and the joint, made by overlapping a first layer made of stainless steel at the cap member side with a second layer made of oxygen-free copper at the joint side,
wherein the first layer and the cap member are joined by welding a whole circumference of a boundary portion between the first layer and the cap member, and the second layer and the joint are joined by welding a whole circumference of a boundary portion between the second layer and the joint.

According to the invention claimed in claim 2, there is provided the pressure sensing device as claimed in claim 1,
wherein a cylindrical base portion having the same diameter as the clad member is formed on the joint at the second layer side, and wherein the base portion and the second layer are welded by a laser welding performed by welding a circuit of a whole circumference of a boundary portion between the base portion and the second layer and then by releasing a track of welding toward the base portion side so as to form a release mark.

### [Advantageous Effects of Invention]

In the pressure sensing device as claimed in claim 1, the first layer made of stainless steel of the clad member and the cap member made of stainless steel are joined by welding a whole circumference of the boundary portion, and the second layer made of oxygen-free copper of the clad member and the joint made of brass are joined by welding a whole circumference of the boundary portion. Namely, because the cap member and the joint are joined together via the clad member by welding, the brazing process and the pickling process are not needed in the production process. Further, because the clad member is composed of the first layer made of stainless steel and the second layer made of oxygen-free copper, the corrosion resistance property of the joined portion between the cap member and the joint is increased owing to the clad member. Further, at the same time, because thermal affection to the other components is reduced, it is possible to previously assemble the pressure detecting portion having the cap member and then to join the joint to the cap member afterward. Therefore, the intermediate stock as the component-in-progress made by joining the joint and the cap member together is unnecessary.

In the pressure sensing device as claimed in claim 2, the base portion and the second layer of the clad member are welded by a laser welding performed by welding a circuit of a whole circumference of the boundary portion and then by releasing a track of welding toward a base portion side so as to form a release mark. Therefore, a molten hole made by laser welding a circuit of the whole circumference is joined by molten liquid. Further, at a portion where the release mark is formed by releasing a track of welding to the base portion, because the end point of the molten hole is not affected by air-tightness and intensity, the base portion and the second layer are surely joined together.

### [Brief Description of Drawings]

[Fig. 1]

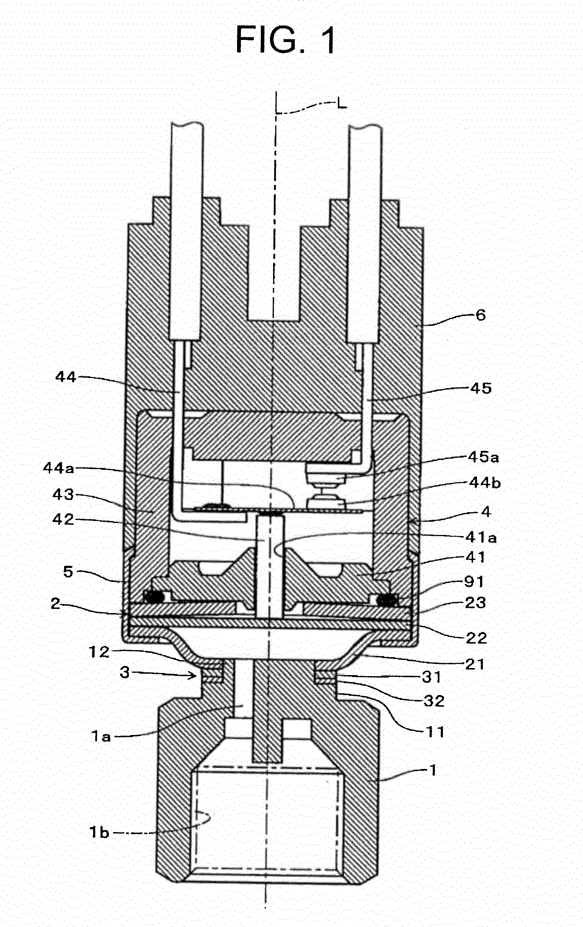

   Fig. 1 is a vertical sectional view showing a first embodiment of a pressure switch according to the present invention.
[Fig. 2]

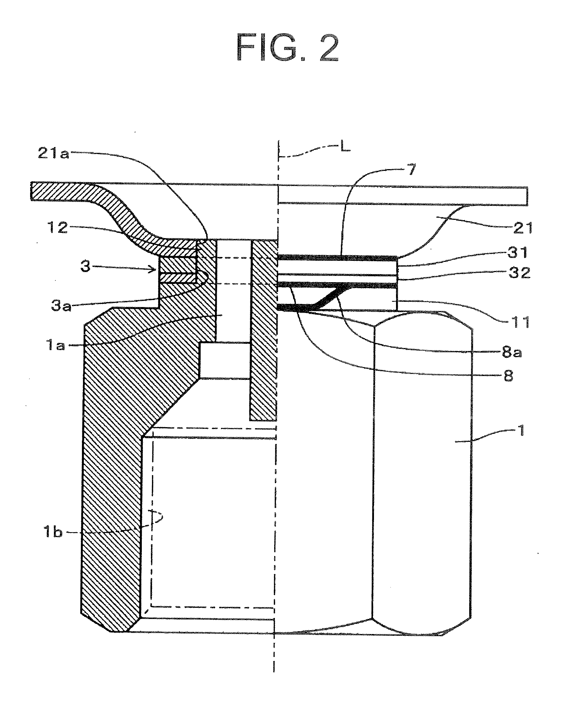

   Fig. 2 is a partially sectional enlarged view of the pressure switch.
[Fig. 3]

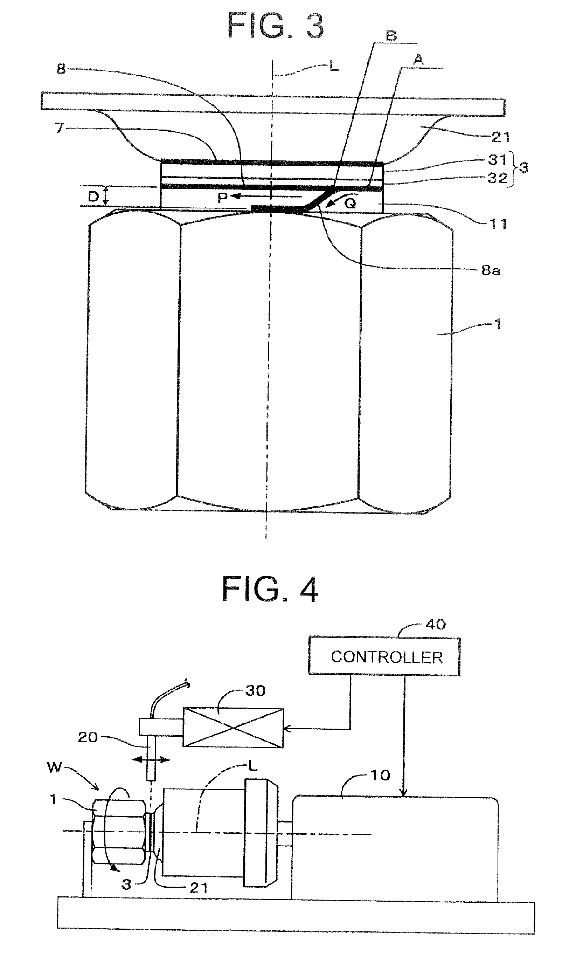

   Fig. 3 is a partially enlarged external view corresponding to Fig. 2.
[Fig. 4]
   Fig. 4 is a schematic view of a laser welding device.
[Fig. 5]

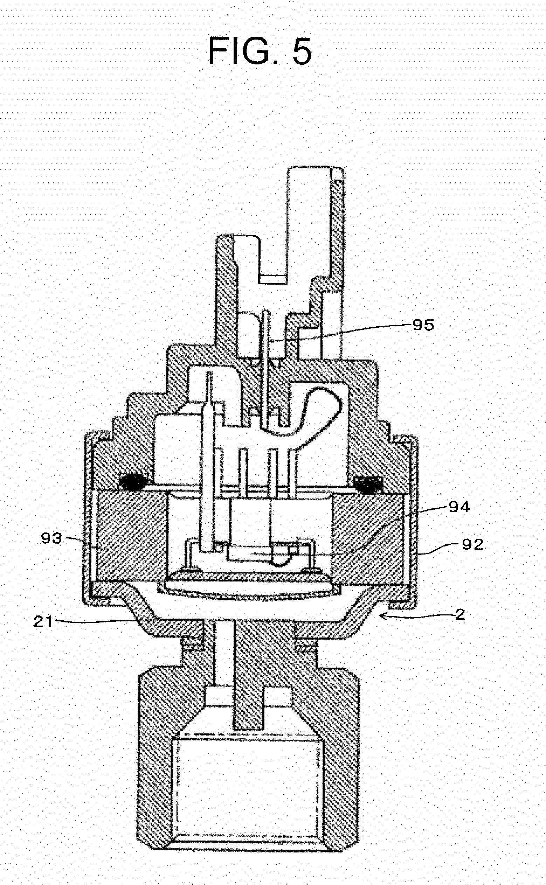

   Fig. 5 is a vertical sectional view showing a second embodiment of a pressure sensor according to the present invention.
[Fig. 6]
   Fig. 6 is a vertical sectional view showing one example of a conventional pressure switch.

### [Description of Embodiments]

Next, an embodiment of a pressure switch as an example of a pressure sensing device according to the present invention will be explained with reference to figures. Fig. 1 is a vertical sectional view showing a first embodiment of the pressure switch. Fig. 2 is a partially sectional enlarged view of the pressure switch, a left half of Fig. 2 is a vertical sectional view, and a right half of Fig. 2 is an external side view. Further, Fig. 3 is a partially enlarged external view corresponding to Fig. 2.
Incidentally, the same components as Fig. 6 and the components corresponding to Fig. 6 are denoted by the same reference signs, and a duplicated detailed explanation will be omitted.

In the pressure switch of this embodiment, a clad member 3 is interposed between a joint 1 and a cap member 21 of a pressure detecting portion 2. The pressure detecting portion 2, the cap member 21, a circular plate 22, and a stopper 23 have the same structures and the same functions as the detecting portion 20, the cap member 20a, the circular plate 20b and the stopper 20c in Fig. 6. A difference is that the cap member 21 made of stainless steel is welded by laser with respect to the clad member 3. Incidentally, a connecting hole 21a is provided on the center of the cap member 21.

The joint 1 is made of brass. A cylindrical base portion 11 is provided on the joint 1 so as to position the cap member 21 side. Further, a thin cylindrical boss portion 12 of which diameter is smaller than the base portion 11 is provided on the base portion 11 so as to fit with the connecting hole 21a of the cap member 21. Further, an introducing path 1a for introducing fluid into the cap member 21 is formed so as to penetrate the base portion 11 and the boss portion 12. Further, a female screw portion 1b communicating with the introducing path 1a and connected to a not-shown pipe is provided on the joint 1.

The clad member 3 is formed in a washer shape having the same diameter as the base portion 11 of the joint 1. A vent hole 3a fitting with the boss portion 12 of the joint 1 is provided on the center of the clad member 3. This clad member 3 is made by overlapping a first layer 31 made of stainless steel same as the cap member 21with a second layer 32 made of oxygen-free copper. The first layer 31 and the second layer 32 are joined together in a manner that metallic atoms are diffused together at a boundary portion thereof.

Further, the vent hole 3a of the clad member 3 is fitted with the boss portion 12 of the joint 1, and the boss portion 12 is fitted with the connecting hole 21a of the cap member 21. Thereby, the clad member 3 is interposed between the cap member 21 and the base portion 11, of which the first layer 31 is at the cap member 21 side, and the second layer 32 is at the base portion 11 side.

As a welding mark 7 is shown in Fig. 3, the first layer 31 and the cap member 21 are laser welded a whole circumference of a boundary portion thereof. Further, as a welding mark 8 is shown, the pressure detecting portion 2 and the base portion 11 are laser welded a whole circumference of a boundary portion thereof. Namely, the same stainless steel of the cap member 21 and the first layer 31 is welded, and the brass of the base portion 11 and the oxygen-free copper of the second layer 32 are welded. Thereby, the joint 1 is firmly fixed to the cap member 21 via the clad member 3, and the air-tightness of the pressure vessel composed of the joint 1, the cap member 21, and the circular plate 22 is maintained.

Incidentally, an example of a production process of the pressure switch according to this embodiment will be described as follows. First, the cap member 21, the circular plate 22, and the stopper 23 are assembled together, and then a circumference of them is plasma welded to form the pressure detecting portion 2. This pressure detecting portion 2 is abutted on a switching portion 4 via an O-ring 91, and firmly fixed to an end (switching portion 4) of a terminal block 43 by swaging with a swaging plate 5. Then, the joint 1 is welded and firmly fixed to the cap member 21 via the clad member 3 as described above.

Another example of the production process will be described as follows. First, the cap member 21, the circular plate 22, and the stopper 23 are assembled together, and then a circumference of them is plasma welded to form the pressure detecting portion 2. The joint 1 is welded and firmly fixed to the cap member 21 of this pressure detecting portion 2 via the clad member 3 as described above. Then, this pressure detecting portion 2 is abutted on the switching portion 4 via an O-ring 91, and firmly fixed to an end (switching portion 4) of the terminal block 43 by swaging with a swaging plate 5.

Fig. 4 is a schematic view of a laser welding device. This laser welding is performed by Yb (ytterbium) fiber laser welding. A work W as an assembly of the joint 1, the clad member 3, and the cap member 21 is held by a rotary jig 10, and rotated in one direction about an axis L of the joint 1 and the clad member 3. A working head 20 for irradiating laser is reciprocated in a direction parallel to the axis L by an actuator 30. These operations are controlled by a controller 40, and welding is performed. Incidentally, the welding is performed in shield gas atmosphere.

As shown in Fig. 3, a release mark 8a is extended obliquely to the base portion 11 side from a part of the welding mark 8 formed between the second layer 32 and the base portion 11 (joint 1). This release mark 8a is made by release welding as follows. When the second layer 32 and the base portion 11 are welded, firstly, the welding is started from a position A at a boundary portion between the second layer 32 and the base portion 11. When the work W is rotated, the laser beam is scanned in an arrow P direction of Fig. 3. The work W is rotated 360 degrees plus 10 to 15 degrees. Namely, the work W is welded from the position A to a position B about 370 to 375 degrees. Then, when the laser beam reaches the position B, while the work W is rotated, the working head 20 is moved to the joint 1 side parallel to the axis L. In this way, the laser beam is scanned as an arrow Q of Fig. 3. Further, at this time, laser output is reduced. Thereby, a lapping portion where the welding is overlapped is formed on a portion corresponding to rotation angle of 10 to 15 degrees from the position A to the position B, and the release mark 8a is formed obliquely from the position B. Incidentally, a distance D between the welding mark 8 and the release mark 8a is more than a welding width, for example, 0.8 mm.

Upon laser welding, a molten hole is formed by the laser irradiation at the boundary portion between the second layer 32 and the base portion 11. Molten liquid flows to this molten hole, and the second layer 32 and the base portion 11 are firmly fixed at the boundary portion after the laser is moved away. Then, the fixations by this melting are continued, and owing to the molten liquid at the release mark 8a from the position B, the fixation is also done at the position B. Then, because the laser output is turned zero at a final portion of this release mark 8a, the pressure detecting portion 2 and the base portion 11 are completely welded.

Incidentally, in the welding of the first layer 31 and the cap member 21, the lapping portion is also formed by the rotation of 370 to 375 degrees. However, the molten hole is generated at only the brass portion of the joint 1, and not generated at the stainless steel portion of the first layer 31 and the cap member 21. Therefore, the release welding is not necessary upon the welding between the first layer 31 and the cap member 21. Incidentally, in the welding between the brass and the oxygen-free copper, a boiling point of the Zn (zinc) in the brass is 930 degree Celsius, and is lower than a melting point 1083 degree Celsius of copper. Therefore, a void is easily generated and turned to the molten hole.

The fiber laser allows to produce a laser beam of which beam diameter is small, for example, about 0.2 mm. Thereby, the clad member 3 is deeply and sharply welded in a radial direction, and the welding zone is not beyond the boundary between the first layer 31 and the second layer 32. Further, a welding width is allowed not to be increased.

As described above, the clad member 3 made by overlapping the first layer 31 made of stainless steel with the second layer 32 made of oxygen-free copper is interposed between the joint 1 made of brass and the cap member 21 made of stainless steel. A whole circumference of the boundary between the first layer 31 and the cap member 21 is joined by welding. A whole circumference of the boundary between the second layer 32 and the base portion 11 of the joint 1 is joined by welding. An overlapped joined portion between the first layer 31 and the second layer 32 of this clad member 3 has high strength, and high corrosion resistance property. Incidentally, a clad member made of brass and stainless steel and the clad member made of oxygen-free copper and stainless steel according to this embodiment are bend-tested. As the result, the former is stripped at the overlapped joined portion, and the latter is not stripped at the overlapped joined portion.

In the first embodiment described above, the pressure switch is explained as an example of the pressure sensing device. However, as shown in Fig. 5, the present invention may be applied to a pressure sensor as the pressure sensing device. In Fig. 5, the same components as Fig. 1 and the components corresponding to Fig. 1 are denoted by the same reference signs, and a duplicated detailed explanation will be omitted. The pressure detecting portion 2 of the pressure sensor according to this second embodiment also includes the cap member 21 firmly fixed to a case 93 by a swaging plate 92. Similar to the first embodiment, the joint 1 is joined to the cap member 21 via the clad member 3 by laser welding. This pressure sensor senses fluid pressure in the cap member 21 by a sensor element 94, and outputs a sensor signal corresponding to the pressure to the outside via a terminal 95 and a not-shown lead wire. In the pressure sensor of this second embodiment, the operations of the joint 1, the clad member 3, and the cap member 21 by the laser welding are the same as the first embodiment.

Incidentally, when comparing the pressure switch using the clad member 3 of this embodiment with a pressure switch of comparison example using a clad member made of other metal, a difference of pressure resistance with respect to fluid from the joint 1 side is listed as Table 1 below.

**[Table 1]**

| Intended product | Pressure resistance |
|---|---|
| Embodiment | More than 90 MPa |
| Oxygen-free copper/stainless steel clad member | Not destroyed |
| Comparison example | 70 to 73 Mpa |
| Brass/stainless steel clad member | Destroyed at a joined surface of the clad member |

In this way, because the joint 1 and the cap member 21 are firmly fixed together by fiber laser welding, the pickling process is unnecessary. Further, when the output power of the laser beam is reduced, the addition of the fume and the generation of the void due to vaporization of zinc generated by brass welding are reduced, thereby, finishing of the joined portion gets better. Further, because the pressure detecting portion 2 having the cap member 21 is previously assembled, and the joint 1 is joined to the cap member 21 afterward, the intermediate stock as the component-in-progress made by joining the joint 1 and the cap member 21 together is unnecessary.

Further, in these embodiments, the joint 1 is a flare type to screw the pipe into the female screw 1b continued to the introducing path 1a. However, the joint 1 may be another type having a hole continued to the introducing path 1a, and a male screw is formed around it to screw the pipe outward. In this way, even when the other type of the joint 1 is produced, because the joint 1 is joined afterward, the pressure detecting portion 2 and the switching portion 4 can be previously adjusted, and production flexibility is increased.

### [Reference Signs List]

1 joint
2 pressure detecting portion
3 clad member
4 switching portion
7 welding mark
8 welding mark
8a release mark
11 base portion
21 cap member
31 first layer
32 second layer

## Claims

1. A pressure sensing device comprising:
a brass-made joint connected to a pipe through which fluid of an object for pressure detection flows;
a pressure detecting portion having a stainless-steel-made cap member into which the fluid is introduced from the joint; and
a washer-shaped clad member interposed between the cap member and the joint, made by overlapping a first layer made of stainless steel at the cap member side with a second layer made of oxygen-free copper at the joint side,
wherein the first layer and the cap member are joined by welding a whole circumference of a boundary portion between the first layer and the cap member, and the second layer and the joint are joined by welding a whole circumference of a boundary portion between the second layer and the joint.

2. The pressure sensing device as claimed in claim 1,
wherein a cylindrical base portion having the same diameter as the clad member is formed on the joint at the second layer side, and
wherein the base portion and the second layer are welded by laser welding performed by welding a circuit of a whole circumference of a boundary portion between the base portion and the second layer and then by releasing a track of welding toward the base portion side so as to form a release mark.
